# FASCICULE DE BREVET EUROPEEN

(11) **EP 0 619 438 B1**
(45) Date de publication et mention de la délivrance du brevet: **19.11.1997**
(21) Numéro de dépôt: 94400371.4
(22) Date de dépôt: 22.02.1994
(51) Int. Cl.: F16C 19/52, G01P 3/44

(54) **Roulement équipé d'un dispositif capteur d'informations**
Lager mit einer Messfühlereinrichtung
Bearing equipped with a detecting device

(30) Priorité: 09.04.1993 FR 9304237
(43) Date de publication de la demande: 12.10.1994
(73) Titulaire: SNR ROULEMENTS, F-74010 Annecy (FR)
(72) Inventeur: Alff, Denis, F-74000 Annecy (FR)
(74) Mandataire: Ernst-Schonberg, Michel

(56) Documents cités:
- EP-A- 0 453 331
- EP-A- 0 511 105
- EP-A- 0 511 107
- DE-A- 3 809 904
- DE-U- 9 010 131

## Description

L'invention concerne un roulement ou palier équipé d'un dispositif capteur d'informations orientable constitué par un élément codeur qui se déplace devant un capteur porté par un support annulaire et monté dans une glissière formée sur ledit support et associée à des moyens d'immobilisation du dispositif capteur conformément au préambule de la revendication indépendante.

La publication DE-U-9010131 décrit un roulement du type prédéfini dans lequel un support annulaire fixe constitue un élément du dispositif d'étanchéité.

L'invention a pour objet un montage radial du capteur sur un équipement additionnel du roulement, qui fait application d'un support annulaire orientable au contact de la bague fixe dudit roulement.

Le problème est résolu conformément à la caractéristique de la revendication indépendante 1.

Selon une réalisation préférée de l'invention le support du capteur est constituée par un disque annulaire qui possède des zones découpées et des déformations fonctionnelles, localisées auxdites zones dans le but d'immobiliser et de positionner le capteur dans sa glissière de montage.

D'autres caractéristiques et avantages de l'invention apparaîtront à la lecture de la description d'exemples de réalisation du palier et du disque de retenue du capteur en référence au dessin annexé dans lequel :
- la figure 1 est une vue en coupe axiale suivant la ligne I de la figure 2 d'un roulement équipé d'un support de capteur.
- la figure 2 est une demi-vue de face du roulement représenté à la figure 1.
- la figure 3 est une vue en coupe agrandie de la zone de montage du support de capteur sur la bague de roulement.
- la figure 4 est une vue en élévation du support de capteur suivant deux modes de réalisation.
- la figure 5 est une vue en coupe axiale d'un roulement équipé d'une variante de réalisation du support du capteur.
- la figure 6 est une vue en élévation du capteur monté dans son support représenté à la figure 5.
- la figure 7 est une vue en coupe rabattue suivant la ligne VII - VII du montage de capteur représenté à la figure 6.
- la figure 8 est une vue en élévation du capteur monté dans son support suivant une variante de réalisation de ce dernier.
- la figure 9 est une vue en coupe radiale d'une autre variante de réalisation du support de capteur.
- la figure 10 est une coupe partielle agrandie du support de capteur représenté à la figure 9.
- la figure 11 est une représentation perspective de la partie fonctionnelle du support du capteur représenté à la figure 9.

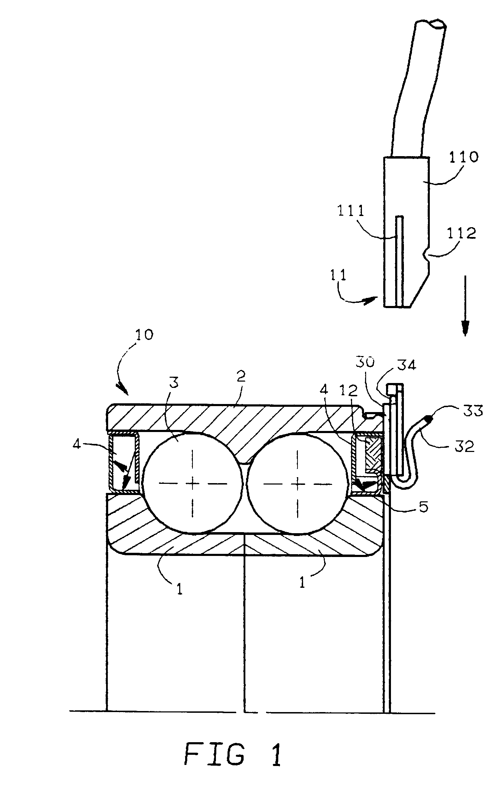

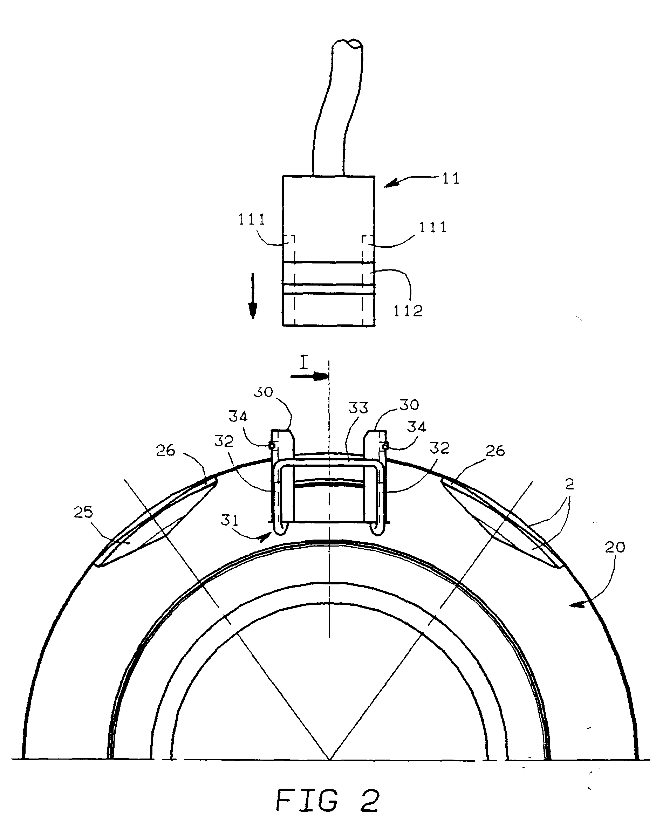

Le roulement représenté aux figures 1 et 2 est constitué par une bague intérieure tournante fractionnée 1 en deux parties, une bague extérieure fixe 2 et par des corps roulants 3 disposés entre lesdites bagues.

Le roulement 10 est rendu étanche à titre d'exemple par deux garnitures 4 à lèvres d'étanchéité préassemblées décrites dans la publication FR-A-2505951.

Le roulement 10 est destiné à servir de palier dans des montages conventionnels tels que décrits dans la publication EP-A-453331.

Le dispositif capteur d'informations comporte de manière en soi connue, un élément capteur 11 et un élément codeur 12 solidaire en rotation de la bague tournante 1 par l'intermédiaire d'un déflecteur 5 de la garniture d'étanchéité 4.

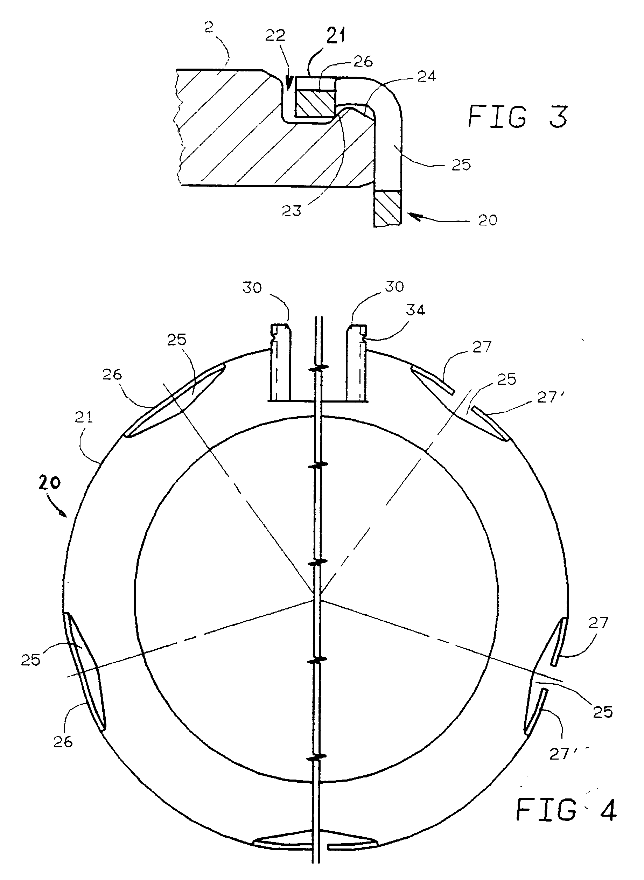

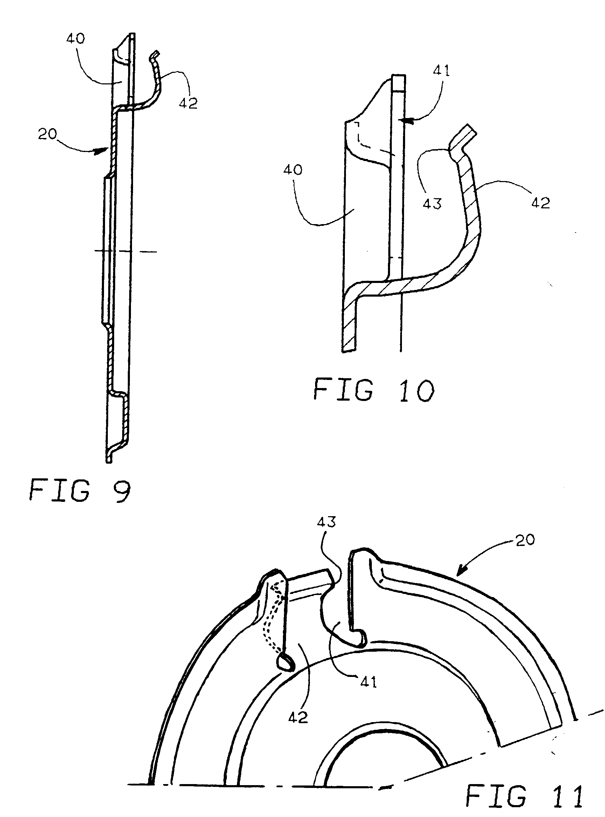

L'élément capteur 11 est contenu dans une tête de montage 110 dont les flancs réalisent la fonction de guidage à l'aide de rainures 111. La face avant de la tête 110 porte une rainure transversale 112 destinée à recevoir une nervure de rétention et de positionnement de la tête de montage 110 du capteur 11 sur un support annulaire 20 dont les variantes de réalisation sont représentées aux figures 4 et 9.

Selon la figure 4, le support est constitué par un disque annulaire 20 en tôle découpée dont le bord extérieur 21 est axialement replié pour coiffer sa portée circulaire de montage limitée par la face latérale de la bague fixe 2.

A cet effet et conformément à la figure 3, la bague 2 porte une gorge usinée 22 limitée axialement par une surface de butée conique 23 qui se prolonge axialement par une rampe de montage 24 à surface conique dont le diamètre extérieur est adjacent à la portée 23.

Selon un premier mode de réalisation du support 20, celui-ci possède des zones 25 découpées par poinçonnage, qui sont angulairement réparties à la périphérie du disque et à la surface de son bord extérieur 21. L'extrémité axiale du bord 21 délimite ainsi avec chaque zone telle que 25, un barreau élastique 26 de positionnement axial du support 20 au contact de la bague fixe, fléchi radialement en direction du fond de la gorge 22.

La partie droite de la figure 4 montre des barreaux sectionnés en deux parties de manière à réaliser des pattes d'accrochage 27, 27' fléchies suivant la corde de la zone découpée 25 qui assurent également le positionnement axial du support 20 au contact de la bague fixe.

La partie gauche de la figure 4 montre des barreaux 26 fléchis comme précédemment qui permettent d'obtenir un effort radial permanent d'appui du barreau 26 dans la gorge 22 et son positionnement axial.

Ainsi que cela est montré à la figure 4 le disque 20 porte une glissière 30 de montage de la tête rainurée du capteur 11. Les bords parallèles de la glissière 30 sont ici réalisés par poinçonnage et pliage symétrique de 2 languettes formées dans la partie annulaire du disque 20.

Dans le but d'immobiliser le capteur 11 sur le disque 20, il est fait application d'un étrier 31 réalisé à l'aide d'un fil à ressort dont les branches élastiques 32 sont des segments de fil pliés et accrochés sur le disque 20 à l'extrémité des glissières 30. Une portion 33 de l'étrier 31 s'étend entre les branches 32 et constitue une nervure de rétention de la tête 110 du capteur au contact de la rainure 112.

Ainsi que cela est représenté à la figure 2, chaque branche 32 s'étend en partie à partir de son point d'accrochage 34 le long du flanc intérieur de la glissière 30 correspondante, puis à l'extérieur de cette glissière 30 et le long de celle-ci, pour définir conjointement avec la nervure 33, le moyen élastique de rappel du capteur 11 au contact du disque 20.

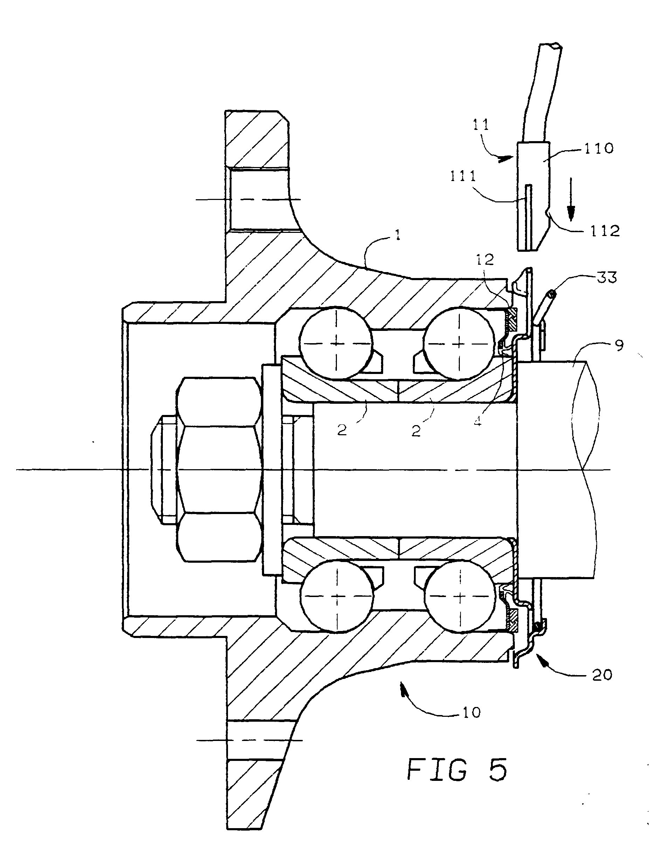

La figure 5 décrit une variante de réalisation du roulement équipé du dispositif capteur. La bague extérieure tournante 1 est réalisée en une seule pièce tandisque la bague intérieure fixe 2 est réalisée en deux parties. La figure 5 et les figures 6 à 10, plus particulièrement en rapport avec le support annulaire du capteur montrent des éléments et organes déjà décrits en référence des figures 1 et 2 et portent de ce fait les mêmes repères.

Ainsi que cela est montré plus particulièrement aux figures 5, 9, 10 et 11, le disque 20 est réalisé par emboutissage et poinçonnage. Le disque 20 est monté provisoirement sur le roulement 10 conjointement avec le capteur 11. A cet effet la face du disque 20 tournée vers le roulement est collée sur la bague 2 dans le but de faciliter le montage du roulement équipé du dispositif capteur directement sur un arbre porteur 9.

La tête 110 du capteur est montée sur le disque 20 qui possède une gorge annulaire 40 emboutie à la surface dudit disque 20 telle que représentée aux figures 9 et 11.

Le fond de la gorge 40 est localement poinçonné et possède une découpe 41 à laquelle se raccordent une languette ou des pattes élastiques 42 dont l'extrémité porte un bossage ou une nervure 43 de rétention radiale de la tête 110 du capteur au contact de la rainure 112. Dans cette configuration les bords latéraux parallèles de la découpe 41 constituent des glissières de montage de la tête 110.

La retenue radiale de la tête 110 est opérée ainsi que cela a été décrit en référence aux figures 1, 2.

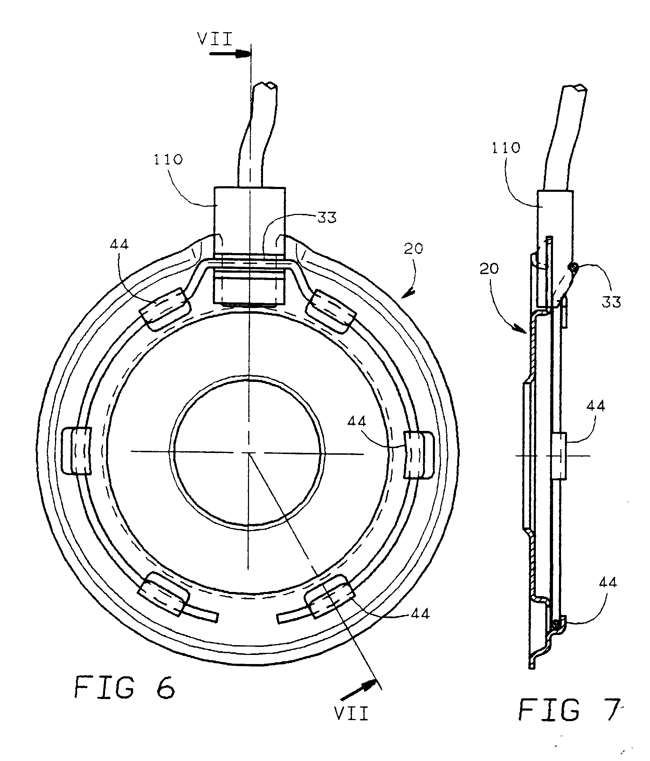

La figure 6 décrit un segment de retenue 33 de la tête de capteur 110. Le segment 33 fait partie d'un anneau élastique expansible au contact de pattes de montage 44 réparties circonférentiellement sur la face extérieure du disque 20 et destinées à retenir des portions de fil à ressort réparties à la périphérie de l'anneau.

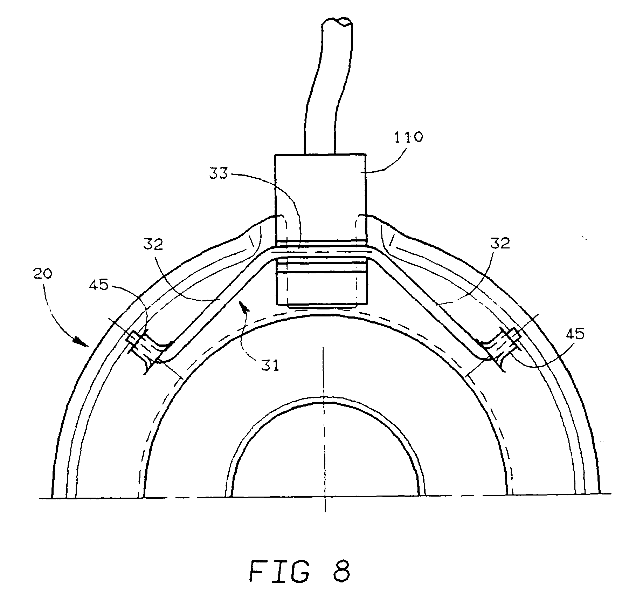

Selon la figure 8 la nervure 33 fait partie du fil à ressort mis en forme et porteur de segments d'accrochage 45 des branches 32 au contact du disque 20.

Ainsi que cela a été montré au dessin, l'ensemble des moyens de retenue du capteur, tels que les barreaux élastiques 26, des pattes ou languettes élastiques 42, peuvent être réalisés par déformation locales de la matière constitutive du disque 20 au cours d'opérations conventionnelles de poinçonnages.

## Revendications

1. Roulement équipé d'un dispositif capteur d'informations constitué par un élément codeur (12) qui se déplace devant un capteur (11) à tête de montage (110) avec flancs de guidage portée par un support (20) annulaire orientable et montée dans une glissière (30, 41) formée sur ledit support (20) et associée à des moyens d'immobilisation dudit capteur, caractérisé par le fait que les flancs de guidage réalisent le guidage à l'aide de rainures (111) le support (20) porte des moyens de positionnement axial (26, 27, 27') au contact de la bague fixe (2) du roulement et des moyens élastiques (31,42) à nervure de rétention de rappel (33, 43) coopérant avec une rainure transversale (112) de la tête de montage (110) du capteur (11) au contact dudit support (20), pour l'obtention d'immobilisation radiale de ladite tête de montage (110) dudit capteur (11) dans la glissière (30).

2. Roulement selon la revendication 1, caractérisé par le fait que le support (20) de la tête de montage (110) du capteur (11) est constitué par un disque annulaire qui possède des zones (25) découpées et des déformations (26, 27, 27') fonctionnelles localisées auxdites zones, dans le but d'immobiliser ledit support par rapport au roulement.

3. Roulement selon la revendication 2, caractérisé par le fait que les zones découpées (25) du disque sont angulairement réparties à la périphérie du disque et délimitées par des barreaux élastiques (26) fléchis radialement en direction du fond d'une gorge (22) usinée sur la bague fixe (2) du roulement.

4. Roulement selon la revendication 1, caractérisé par le fait que la nervure de rétention du capteur est formée par une portion (33, ) de fil à ressort mis en forme et porteur de segments d'accrochage (45) sur un disque annulaire (20).

5. Roulement selon la revendication 4, caractérisé par le fait que le fil à ressort est conformé en un étrier (31) dont les branches (32) sont ancrées sur le disque (20) support de la tête de montage (110) du capteur (11).

6. Roulement selon la revendication 4, caractérisé par le fait que le fil à ressort est constitué par un anneau élastique expansible au contact de pattes de montage (44) réparties circonférentiellement sur la face extérieure du disque annulaire (20).

7. Roulement selon l'une quelconque des revendications 1 à 3, caractérisé par le fait que la nervure (43) de rétention de la tête de montage (110) du capteur (11) est portée par une languette (42) élastique orientée vers ladite tête de montage (110).

8. Roulement selon l'une quelconque des revendications 3, 6 ou 7, caractérisé par le fait que les moyens d'immobilisation (26) du disque annulaire (20) de la tête de montage (110) du capteur (11) et les moyens de retenue (42) de ladite tête de montage (110) sont réalisés par des poinçonnages localisés sur la surface du disque (20).

## Patentansprüche

1. Wälzlager mit einer Meßfühlereinrichtung, die durch ein Kodierelement (12) gebildet ist, das sich vor einem Meßfühler (11) mit einem Montagekopf (110) mit Führungsflanken erstreckt, der durch einen ringförmigen Träger (20) getragen ist, der in einer Gleitschiene (30, 41) ausrichtbar und anbringbar ist, die auf dem Träger (20) gebildet ist und einer Einrichtung zum Festsetzen des Meßfühlers zugeordnet ist, dadurch gekennzeichnet, daß die Flanken der Führung die Führung mit Hilfe von Nuten (111) realisieren, der Träger (20) eine Einrichtung (26, 27, 27') zum axialen Positionieren des Wälzlagers in Kontakt mit dem feststehenden Ring (2) und eine elastische Einrichtung (31, 42) mit Rückstellhalterippen (33, 43) trägt, die mit einer Quernut (112) des Montagekopfs (110) des Meßfühlers (11) in Kontakt mit dem Träger (20) zusammenwirkt, um eine radiale Festsetzung des Montagekopfs (110) des Meßfühlers (11) in der Gleitschiene (30) zu erhalten.

2. Wälzlager nach Anspruch 1, dadurch gekennzeichnet, daß der Träger (20) für den Montagekopf (110) des Meßfühlers (11) durch eine ringförmige Scheibe gebildet ist, die freigeschnittene Bereiche (25) und funktionelle Verformungen (26, 27, 27') aufweist, die in den Bereichen mit dem Zweck angeordnet sind, den Träger in bezug auf das Wälzlager festzusetzen.

3. Wälzlager nach Anspruch 2, dadurch gekennzeichnet, daß die freigeschnittenen Bereiche (25) der Scheibe winkelmäßig über dem Umfang der Scheibe verteilt und durch elastische Stege (26) begrenzt sind, die radial in Richtung auf den Grund einer Rille (22) ausgebogen sind, die in den feststehenden Ring (2) des Wälzlagers eingetieft ist.

4. Wälzlager nach Anspruch 1, dadurch gekennzeichnet, daß die Halterippe für den Meßfühler durch einen formangepaßten Federdrahtabschnitt (33) gebildet ist, und Verankerungsorgane (45) auf der ringförmigen Scheibe (20) trägt.

5. Wälzlager nach Anspruch 4, dadurch gekennzeichnet, daß der Federdraht zu einem Bügel (31) geformt ist, dessen Schenkel (32) auf der Tragscheibe (20) für den Montagekopf (110) des Meßfühlers (11) verankert sind.

6. Wälzlager nach Anspruch 4, dadurch gekennzeichnet, daß der Federdraht von einem elastischen Ring gebildet ist, der in Kontakt mit Montagekrallen (44) erweiterbar ist, die umfangsmäßig über die Außenseite der ringförmigen Scheibe (20) verteilt sind.

7. Wälzlager nach einem der Ansprüche 1 bis 3, dadurch gekennzeichnet, daß die Halterippe (43) für den Montagekopf (110) des Meßfühlers (11) durch eine elastische Zunge (42) getragen ist, die in Richtung auf den Montagekopf (110) ausgerichtet ist.

8. Wälzlager nach einem der Ansprüche 3, 6 oder 7, dadurch gekennzeichnet, daß die Einrichtung (26) zum Festsetzen der ringförmigen Scheibe (20) des Montagekopfs (110) des Meßfühlers (11) und die Rückhalteeinrichtung für den Montagekopf (110) durch Stanzungen realisiert sind, die auf der Oberfläche der Scheibe (20) lokalisiert sind.

## Claims

1. A rolling bearing provided with a data sensor device constituted by a coding element (12) which moves in front of a sensor (11) having a mounting head (110) with guide edges supported by a guidable annular support (20) which is mounted in a guide (30, 41) which is formed on said support (20) and associated with means for immobilising said sensor, characterised by the fact that the guide edges perform their guiding function with the aid of grooves (111), the support (20) has axial positioning means (26, 27, 27') in contact with the fixed ring (2) for the rolling bearing and elastic return means (31, 42) with a return holding rib (33, 43) cooperating with a transverse groove (112) of the mounting head (110) of the sensor (11) in contact with said support (20), for obtaining radial immobilisation of said mounting head (110) of said sensor (11) in the guide (30).

2. A rolling bearing according to Claim 1, characterised by the fact that the support (20) for the mounting head (110) of the sensor (11) is constituted by an annular disk which has cut out zones (25) and functional regions of deformation (26, 27, 27') which are iocated in said zones, with the aim of immobilising said support in relation to the rolling bearing.

3. A rolling bearing according to Claim 2, characterised by the fact that the cut out zones (25) of the disk are angularly distributed along the periphery of the disk and are delimited by small elastic bars (26) which bend radially towards the base of a groove (22) which is machined on the fixed ring (2) of the rolling bearing.

4. A rolling bearing according to Claim 1, characterised by the fact that the retaining rib of the sensor is formed by a portion (33), with a shaped spring wire bearing segments (45) for hooked attachment to an annular disk (20).

5. A rolling bearing according to Claim 4, characterised by the fact that the sprung wire is shaped into a stirrup member (31) whose limbs (32) are anchored within the disk (20) which supports the mounting head (110) of the sensor (11).

6. A rolling bearing according to Claim 4, characterised by the fact that the sprung wire is constituted by an expandable elastic ring in contact with the assembly legs (44) distributed circumferentially over the outer face of the annular disk (20).

7. A rolling bearing according to any one of Claims 1 to 3, characterised by the fact that the retaining rib (43) for the mounting head (110) of the sensor (11) is supported by an elastic tongue portion (42) which is directed towards said mounting head (11)).

8. A rolling bearing according to any one of Claims 3, 6 or 7, characterised by the fact that the means (26) for immobilising the annular disk (20) of the mounting head (110) of the sensor (11) and the retaining means (42) for said mounting head (110) are formed by regions of punching located on the surface of the disk (20).
